# EUROPEAN PATENT SPECIFICATION

(11) **EP 1 449 608 B1**
(45) Date of publication and mention of the grant of the patent: **23.04.2008**
(21) Application number: 03078657.8
(22) Date of filing: 20.11.2003
(51) Int. Cl.: B23D 33/10, B23D 31/00, B30B 9/32

(54) **Machine for separating blocks of iron material from a mass of loose scrap**
Maschine zum Trennen von Eisenblocken aus Schrott
Machine pour la séparation de blocs en matériau ferreux a partir d'une masse de ferraille

(30) Priority: 19.02.2003 IT re20030018
(43) Date of publication of application: 25.08.2004
(73) Proprietor: Wasp S.r.l., 40137 Bologna (IT)
(72) Inventor: Bonfiglioli, Giancarlo, 40137 Bologna (IT)
(74) Representative: Corradini, Corrado

(56) References cited:
- EP-A- 0 392 259
- GB-A- 903 556
- US-A- 3 126 816
- US-A- 3 227 021
- US-A- 4 253 388
- US-A- 4 552 062
- US-A- 4 660 469
- US-A- 4 782 748
- US-A- 5 647 545

## Description

This invention relates to the conditioning of iron scrap to prepare it for further salvage operations, and particularly to a machine according to the preamble of claim 1.

The aim is to transform loose scrap, of any shape and of large dimensions, into easily handled and transported small-dimension blocks of material.

Said conditioning operations are currently carried out by sectioning the larger-dimension pieces by oxyacetylene cutting, then pressing them to reduce them to blocks of acceptable dimensions.

These conditioning operations are conducted in large-dimension fixed installations of high cost, the presence of which is only possible on large scrap collection sites.

On medium-small collection sites the known conditioning means cannot be used as their cost would not be justified.

US 4 660 469 discloses the combination of features of the preamble of claim 1, and in particular a shear system for processing scrap is provided that includes guiding and catching walls for enhancing the loading of large items into the shear system. A tiltable hopper is provided with an open rear so that very large and long scrap items may be processed. The hopper is tilltable so that scrap items may be loaded with relatively smaller apparatus. The system operates to precrush the scrap material taking advantage of leverage yielded by using pivoting wing and flap crushing surfaces. Crushing forces are essentially relieved prior to shearing to decrease the likelihood of jamming of the shear head. The system is modular and may be shipped to and erected in remote locations where electric power for operating the system is not available. The system includes an enclosed and protected area for the power plant and control station.

US 4 253 388 discloses a method for compressing and cutting random loaded scrap metal comprising the steps of gravity advancing scrap metal to a cutting zone, applying a first transversal compression to the scrap metal being advanced, guillotine cutting a portion of the scrap metal and concurrently applying a further transversal compression. The machine comprises a scrap metal conveying trough, a transversally movable pressing plunger adapted for traversing the conveying trough and compacting the conveyed scrap metal, a guillotine block for cutting the compacted scrap metal and a guillotine driven compacting block movable perpendicularly to the pressing plunger and cooperating therewith.

An object of the invention is a machine which is of compact dimensions and is able to both separate the material into blocks and to at least partly compact them.

A further object of the invention is a machine enabling blocks to be formed having dimensions variable within a certain dimension range. Another object of the invention is a machine which can be easily demounted and transported by virtue of its constructional and operational simplicity.

A further object of the invention is a machine which can operate automatically or semi-automatically, and requires only modest control during operation.

The said objects are attained by a machine having the characteristics defined in the claims.

The operational and constructional merits of the invention will be apparent from the ensuing detailed description with reference to the accompanying drawings, which show a preferred embodiment thereof by way of non-limiting example.

Figure 1 is a schematic side view of the invention.

Figure 2 shows the details of the cutting section of the machine.

Figure 3 is a view from III of Figure 1.

Figure 4 is a view from IV of Figure 1.

Figure 5 is a perspective view of a detail of the machine.

The figures show a base frame or bed 1, formed from robust steel beams possibly in the form of structural sections, on which there are positioned an internal combustion engine and a hydraulic power unit with relative accessories, not shown.

The frame 1 comprises cradle supports 11, 12, 13 and 14, on which the feed container 2 rests.

The frame 1 also comprises four telescopic seats 1', provided with operating means, not shown, and facilitating the operations involved in loading and unloading the machine.

The feed container 2 comprises a bin with an inclined base 21 and side walls 22, and open both upperly and at its ends. The bin walls are strengthened by thick ribs.

At its higher end the base 21 carries a hinged extension 23 operated by a cylinder-piston unit 24 between a lowered position and a raised position in which it is aligned with the base 21 of the bin.

The side walls of the bin, in proximity to its lower end, consist of two flaps 220 hinged on one side and movable, by cylinder-piston units 221 connected to the frame, between a first position in which they converge as a continuation of the fixed walls 22 of the bin, and a second position in which they are mutually parallel and close together to define a narrow channel.

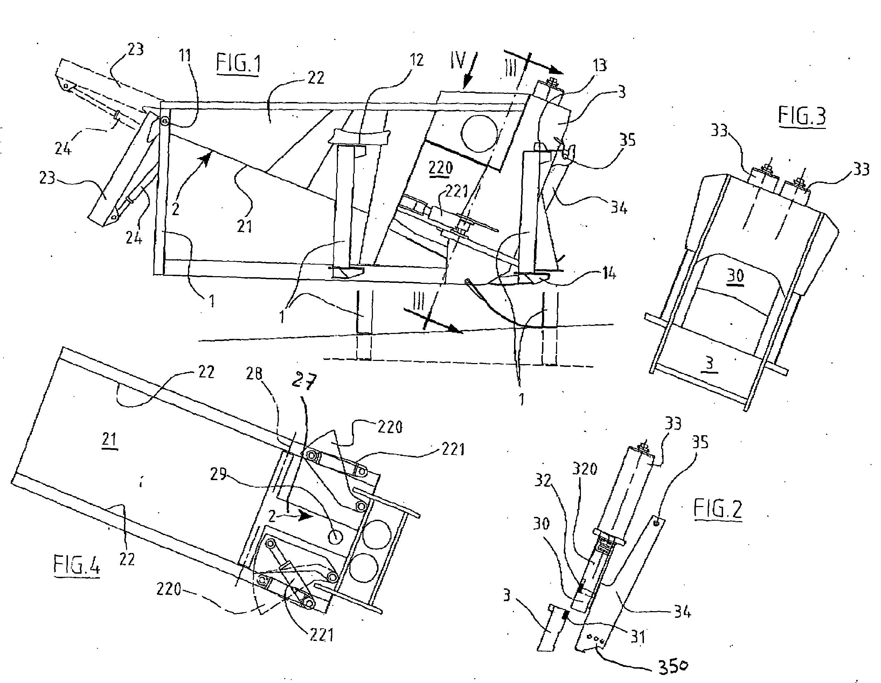

For explicative reasons, in Figure 4 one of the flaps is shown in the first position and the other in the second position.

The above configurations are possible because of the split form of said flaps.

A plate 27 is positioned above and between the movable flaps 220 and is hinged at 28 to the walls 22 of the bin 2, to be operated by a cylinder-piston unit 29 shown only schematically and positioned between the frame 1 and the plate 27.

By moving the movable flaps 220 towards each other and lowering said plate 27 a reduced passage cross-section is created for the material contained in the bin 2.

Downstream of this section, to the right in Figure 1, that wall of the bin perpendicular to the base comprises a robust frame 3 which supports a fixed blade 31 substantially at the level of the bin base 21.

The frame 3 also comprises two parallel and opposing lateral guides 30 for the guiding and sliding of a support beam 320 for a movable blade 32.

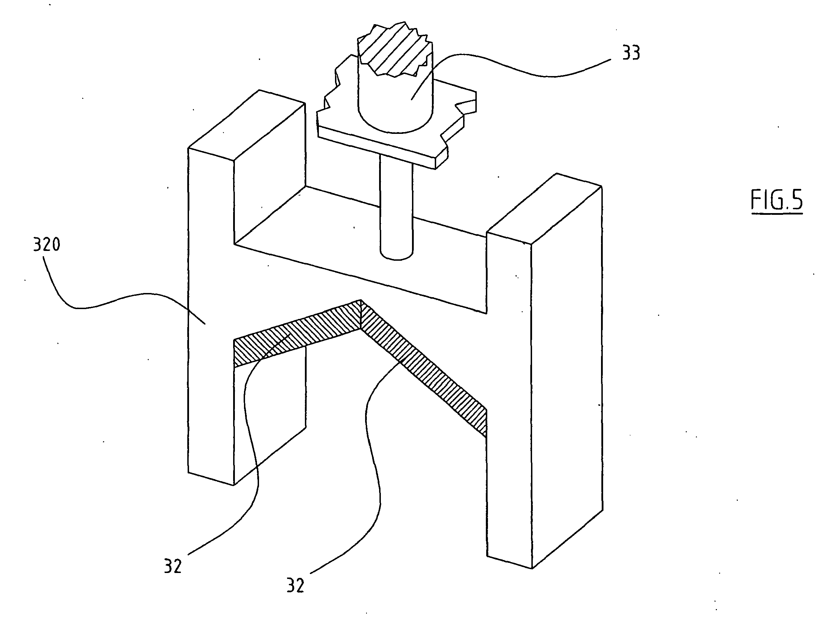

As can be seen from Figure 5, the cutting edge of the blade 32 is shaped as a dihedron to facilitate cutting.

A pair of cylinder-piston units 33 are interposed between the upper side of the frame 3 and said movable blade support beam for operating said movable blade. Specifically the blade support beam presents, in the direction parallel to the base 21 of the bin 2, a thickness approximately equal to the dimension, in the same direction, of the block of iron material which is to be separated.

The blade 32 is positioned on that side of the blade support beam facing the fixed blade 31.

The space below the blade support beam 320 is left free by the frame 3.

Downstream of the blade support beam 320 there is provided, hinged at 35 to the frame 3, a bin closure slab 34 the position of which relative to the frame 3 is adjustable and is defined by the engagement of a bolt or peg, not shown, in one of the holes 350 in the slab.

The position of the slab is chosen to determine the thickness of the block of separated material.

The machine operates in the following manner.

The material is loaded randomly into the inclined bin by known means, to also concern the extension 23.

It slides by gravity onto the base of the bin and onto the extension 23; to start the sliding, the extension can be rotated by the respective cylinder-piston unit 24.

The material descends by gravity until it rests against the flaps 220 which are widened and converge towards each other to provide a sort of funnel.

The cylinder-piston units 221 and 29 are operated to move the flaps 220 towards each other and lower the upper plate 27, so reducing the material cross-section.

The subsequent reopening of the flaps enables the material now of narrowed cross-section to slide against the plate 34, passing below the blade support beam and the relative movable blade.

At this point the blade support beam 320 is lowered to downwardly thrust the material between the fixed blade 31 and the plate 34, to separate it from the remainder and allow it to fall into underlying collection means, not shown.

By raising the beam 320 carrying the movable blade, space is left free for the sliding of further material against the plate 34, and the cycle is repeated in the same manner by the mutual approach of the lateral movable flaps and the other already described movements. Material advancement is facilitated by moving the movable flaps 220 by the action of the cylinder-piston units 221, and by moving the upper rotatable plate 27.

## Claims

1. A machine for separating blocks of iron material from a mass of loose scrap, comprising a loading bin (2) of inclined base (21), a frame (3) perpendicular to and located at the lower end of the base (21), a fixed blade (31) adjacent to the base (21) and carried by the frame (3), a slidable beam (320) operated by at least one cylinder-piston unit (33) and guided by said frame, and carrying a blade (32) movable within the plane adjacent to the fixed blade (31), and a slab (34) which closes the bin downstream of said frame, wherein the side walls of the bin in the part adjacent to said frame consist of two profiled movable flaps (220), hinged to the bin walls (22) and associated with respective cylinder-piston units (221) which position them in a first position in which they converge towards the end of the bin (2), and in a second position in which they are Parallel and spaced from the bin walls (22) **characterized by** comprising an upper plate (27) positioned between said movable flaps (220), said upper plate (27) being hinged (28) at its end distant, in the direction of the bin base (21), from the fixed blade (31) and able to be lowered to able to be lowered to create, together with said flaps (220), a narrow passage cross-section for the material.

2. A machine as claimed in claim 1, **characterised in that** the position of the slab (34), i.e. its distance from the plane in which the blade (32) acts, is chosen by the operator before commencement of the cutting operations.

3. A machine as claimed in claim 1, **characterised in that** the bin rests on cradle supports provided in the bed (1), which is provided with withdrawable feet.

4. A machine as claimed in claim 1, **characterised in that** the withdrawable feet are operated hydraulically

5. A machine as claimed in claim 1. **characterized in that** the cutting edge of said blade (32) is shaped as a dihedron to facilitate cutting and the slab (34) is adjustable in position to determine the thickness of the block of separate material.

## Patentansprüche

1. Eine Maschine zum Teilen von Eisenblöcken aus einer Masse aus losem Schrott, einschl. eines Füllbehälters (2) mit geneigter Basis (21), eines Rahmens (3) senkrecht zu und gelegen am unteren Ende der Basis (21), einer feststehenden Klinge (31) anliegend an die Basis (21) und getragen von dem Rahmen (3), eines verschiebbaren Träger (320), betrieben von wenigstens einer Zylinder-Kolben-Einheit (33) und geführt von dem Rahmen, der außerdem eine Klinge (32) trägt, die innerhalb der Fläche neben der feststehenden Klinge (31) beweglich ist und ferner eine Bodenplatte (34), die den Behälter unterhalb des Rahmens abschließt, wobei die Seitenwände des Behälters in den an den Rahmen anliegenden Stellen aus zwei verkleideten beweglichen Flügeln (220) bestehen, die zu den Behälterwänden (22) schwenkbar angeordnet sind und den entsprechenden Zylinder-Kolben-Einheiten (221) zugeordnet werden, die sie in einer ersten Stellung gegen das Ende des Behälters (2) zusammenlaufend und in einer zweiten Stellung parallel und abseits der Behälterwände (22) positionieren. Gekennzeichnet ferner durch eine Aufliegerplatte (27) gelegen zwischen den beweglichen Flügeln (220), wobei die Aufliegerplatte (27) an dem der feststehenden Klinge (31) in Richtung der Basis (21) entfernten Ende schwenkbar (28) und absenkbar angeordnet ist, um gemeinsam mit den Flügeln (220) einen schmalen Durchlassquerschnitt für das Material zu bilden.

2. Eine Maschine nach Patentanspruch 1, **dadurch gekennzeichnet, dass** die Position der Bodenplatte (34), d.h. ihre Entfernung von der Fläche, in der die Klinge (32) arbeitet, vor Beginn des Schneidebetriebs vom Betreiber ausgewählt wird.

3. Eine Maschine nach Patentanspruch 1, **dadurch gekennzeichnet, dass** der Behälter auf Auflagern verbleibt, die im Maschinenbett (1) zur Verfügung stehen, das mit ausziehbaren Füßen ausgestattet ist.

4. Eine Maschine nach Patentanspruch 1, **dadurch gekennzeichnet, dass** die ausziehbaren Füße hydraulisch betrieben werden.

5. Eine Maschine nach Patentanspruch 1, **dadurch gekennzeichnet, dass** das schneidende Ende der Klinge (32) für eine Erleichterung des Schneidens zweiflächig geschärft ist und dass die Bodenplatte (34) für eine Einstellung der Blockdicke des zu schneidenden Materials in ihrer Position verstellbar ist.

## Revendications

1. Une machine pour la séparation de blocs de matériau ferreux d'une masse de ferraille en vrac, comprenant un bac de chargement (2) à base inclinée (21), un châssis (3) perpendiculaire et situé à l'extrémité basse de la base (21), une lame fixe (31) adjacente à la base (21) et portée par le châssis (3), une traverse coulissante (320) actionnée par au moins une unité cylindre piston (33) et guidée par ledit châssis, et portant une lame (32) amovible dans le plan adjacent à la lame fixe (31), et une dalle (34) qui ferme le bac en aval dudit châssis où les parois latérales du bac dans la partie adjacente audit châssis sont composées de deux volets amovibles profilés (220), articulés sur les parois du bac (22) et associés aux unités cylindre piston respectives (221) qui les positionnent dans une première position dans laquelle ils convergent vers l'extrémité du bac (2), et dans une seconde position dans laquelle ils sont parallèles et espacés des parois du bac (22) **caractérisé en** comprenant une plaque supérieure (27) positionnée entre lesdits volets amovibles (220), ladite plaque supérieure (27) étant articulée (28) à son extrémité distante, dans la direction de la base du bac (21), de la lame fixe (31) et capable de s'abaisser pour créer, avec lesdits volets (220), un passage étroit de coupe pour le matériau.

2. Une machine telle que revendiquée à la revendication 1, **caractérisée par le fait que** la position de la dalle (34), c'est-à-dire sa distance du plan sur lequel la lame (32) agit, est choisie par l'opérateur avant le commencement des opérations de découpe.

3. Une machine telle que revendiquée à la revendication 1, **caractérisée par le fait que** le bac repose sur des supports en berceau fournis dans le banc (1) , qui est doté de pieds escamotables.

4. Une machine telle que revendiquée à la revendication 1, **caractérisée par le fait que** les pieds escamotables sont actionnés hydrauliquement.

5. Une machine telle que revendiquée à la revendication 1, **caractérisée par le fait que** le bord tranchant de ladite lame (32) est façonné en dièdre pour faciliter la découpe et la dalle (34) est ajustable en position pour déterminer l'épaisseur du bloc de matériau séparé.
